# EUROPEAN PATENT APPLICATION

(11) **EP 2 894 112 A1**
(43) Date of publication of application: **15.07.2015**
(21) Application number: 13836115.9
(22) Date of filing: 09.09.2013
(51) Int. Cl.: B65D 77/20, B65D 85/72

(54) **COVER MATERIAL AND PACKAGING CONTAINER**

(30) Priority: 07.09.2012 JP 2012197152; 23.04.2013 JP 2013090358
(71) Applicant: Toppan Printing Co., Ltd., Tokyo 110-0016 (JP)
(72) Inventor: IMAI Nobuhiko, Tokyo 110-0016 (JP); RO Kazuyoshi, Tokyo 110-0016 (JP); IGUCHI Ikuno, Tokyo 110-0016 (JP); MATSUO Ryukichi, Tokyo 110-0016 (JP)
(74) Representative: TBK
(86) International application number: PCT/JP2013/074283
(87) International publication number: WO 2014/038701

(57) **Abstract**

A cover material of the invention includes: a base member; a sealant layer; and an adherence prevention layer including particles and a binder used to adhesively fix the particles to the sealant layer, the particles having a mean particle diameter of 5 to 1000 nanometers.

## Description

### TECHNICAL FIELD

The present invention relates to a cover material and a packaging container, particularly, a cover material having a surface with which contents are to be in contact and which has a high degree of water repellency, and a packaging container including the cover material.

Specifically, the present invention relates to a heat-sealed cover material that is mainly applied to a packaging container used to contain foods.

More particularly, the present invention relates to a cover material for use in a cup-shaped container used to contain yogurt, jelly, pudding, jam, or mousse, and preventing the contents from adhering to the inner surface thereof.

This application claims priority from Japanese Patent Application No. 2012-197152 filed on September 7, 2012, and Japanese Patent Application No. 2013-090358 filed on April 23, 2013, the contents of which are incorporated herein by reference in their entirety.

### BACKGROUND ART

Conventionally, regarding a storage container used to contain: foods such as yogurt, jelly, pudding, syrup, watery cooked rice, or soup; drugs such as a liquid drug, a semisolid drug, a gel state drug; cosmetics; chemical goods; or the like, a cover material is known which is used to prevent the occurrence of problems in that the contents are splattered to the outside of the storage container when opening the storage container, the surface of the cover material that faces the contents has a water-repellent function, and it is difficult for the contents to adhere to the surface.

The above-described cover material may be attached firmly to a container main body that is filled with the contents by heat sealing. In this case, a heat-sealing resin is applied on the cover material that is opposed to the contents, and a water-repellent function layer is provided thereon.

A cover material for use in a cup-shaped container has a structure in which a base member, a barrier layer, and a sealant layer are stacked in layers in this order from the outer side of the cup-shaped container.

The cover configured as described above covers the upper opening of the container that is filled with the contents such as yogurt, the peripheral edge area of the cover seals the flange portion which is an upper edge of the container, and a tightly-sealed container is thereby formed.

It is required for the above-described cover material to have heat-sealability, an adherence property, and easy peeling property when opening the cover material.

Furthermore, it is desirable for the cover material to have non-adhesive with respect to the contents, that is, the contents are less likely to adhere to the back surface of the cover material.

When the contents are adhered to the back surface of the cover material, there are problems in that the contents are lost and wasted by being attached to the cover material and time and effort are required to remove the adhered contents from the surface of the cover material.

Additionally, when opening the cover material, there is a problem in that the contents which are adhered thereto may make user's hand, finger, clothes, or the periphery thereof dirty.

In Patent Document 1, in order to solve the aforementioned problems, a heat-sealing layer located at the innermost surface of the cover material is made of a non-ionic surfactant that exhibits the adherence prevention effect or made of hydrophobic-additives-added polyolefin.

However, the compatibility of the above-described additive is low such that only 10% by weight or less, and preferably, of 7% by weight or less, of the additive can only be mixed.

For this reason, there are problems in that the amount of surface deposition significantly varies depending on an aging condition, the stability thereof is not obtained, or the like.

Because of this, there are problems in that a desired performance or the like cannot be sufficiently obtained.

In Patent Document 2, non-adhesive additives such as a surfactant are not added to a heat-sealing layer of the cover material, and an adherence prevention layer is separately formed in the innermost layer thereof.

Patent Document 2 discloses that, as a result of forming a porous configuration which has a three-dimensional mesh structure and serves as an adherence prevention layer by use of hydrophobic oxide particles, an extremely high level of the adherence prevention effect of the contents from being adhered to the cover material is obtained.

However, this adherence prevention layer has fine particles and is poor in heat resistance; in the case where a storage time of the layer under a high temperature environment becomes longer, hydrophobic particles are deposited in a hot melt resin layer serving as a heat-sealing layer, and there is a problem in that the adherence prevention effect is extinguished.

In a step of filling contents into a container, particularly, in a sealing step, the above-mentioned extinguishment of the above-described adherence prevention effect causes an extremely-complicated problem in handleability of the container.

Patent Document 3 discloses that an adherence prevention layer is provided on a sealant layer.

As a result of using wet silica particles having a large average particle diameter such as 2 to 7 micrometers as an adherence prevention layer, a degree of deposition of wet silica is reduced.

Accordingly, in this disclosure, even where a dehydration temperature under a high temperature environment or in a coating step becomes high, an adherence prevention function can be maintained.

Adversely, since the particle size of the wet silica particle is large, the wet silica particles are dropped from the adherence prevention layer, the adherence prevention function is likely to irregularly occur, and there is a problem in that the adherence prevention effect is not stable.

Patent Document 4 discloses that a surface of silicone elastomer, fluorine-containing elastomers, or the like is highly hydrophobically treated and that a cover material exhibiting the removal effect that prevents the contents from being adhered thereto and easily removes the contents therefrom is thereby provided.

However, the material is poor in sealability, and it is difficult for the material to apply to a packaging container such as a cover material or a pouch.

Patent Document 5 discloses a layered body that can be used in a cover material which is firmly sealed by heat-sealing.

In the layered body, irregularities are applied to the surface of the heat-sealing resin by mixing filler particles into a thermoplastic resin layer serving as a heat-sealing resin, the property of preventing the hydrophobic oxide particles, which are located on the uppermost surface and exhibit a water-repellent function, from being dropped is improved.

However, in the layered body disclosed in Patent Document 5, since the diameter of the filler particle is larger than the thickness of the thermoplastic resin layer and the thermoplastic resin layer includes particles, the adhesion strength of the filler particles is not sufficiently obtained in the layered body.

Furthermore, since the thermoplastic resin is flowable during heating, the particles easily move therein.

Consequently, in steps such as a step of heat-sealing a container main body, there is a problematic concern that a desired water-repellent function is not produced due to dropping-off of the filler particles from the layered body.

### PRIOR ART DOCUMENTS

### PATENT DOCUMENTS

[Patent Document 1]Japanese Unexamined Patent Application, First Publication No. 2002-37310
[Patent Document 2]Japanese Patent No. 4348401
[Patent Document 3]Japanese Patent No. 4668352
[Patent Document 4]Japanese Unexamined Patent Application, First Publication No. 2002-69246
[Patent Document 5]Japanese Unexamined Patent Application, First Publication No. 2011-093315

### SUMMARY OF INVENTION

### PROBLEMS TO BE SOLVED BY THE INVENTION

The invention was conceived in view of the above-described circumstances and an object thereof is to provide a cover material that realizes both contents-adhesion-prevention and heat-seal properties and can reliably produce a desired water-repellent function even after the heat-sealing is carried out.

Additionally, the invention has an object to provide a packaging container in which it is difficult for the contents to be adhered to the cover material even where tight sealing is carried out by heat-sealing.

### MEANS FOR SOLVING THE PROBLEMS

A cover material according to the first aspect of the invention includes: a base member; a sealant layer; and an adherence prevention layer including particles and a binder, the particles having a mean particle diameter of 5 to 1000 nanometers, the binder being used to adhesively fix the particles to the sealant layer.

In the cover material according to the first aspect of the invention, it is preferable that the particles be inorganic oxide that is hydrophobic surface treated with a functional group.

In the cover material according to the first aspect of the invention, it is preferable that the functional group include at least one selected from the group consisting of alkylsilyl, aminoalkylsilyl, methacrylsilyl, dimethylpolysiloxane, dimethylsiloxane, trimethylsilyl, and dimethylsilyl.

In the cover material according to the first aspect of the invention, it is preferable that the inorganic oxide include at least one selected from the group consisting of silicon oxide, aluminum oxide, titanium dioxide, and magnesium oxide.

In the cover material according to the first aspect of the invention, it is preferable that the binder include metal alkoxide or hydrolyzate of metal alkoxide.

In the cover material according to the first aspect of the invention, it is preferable that the weight ratio of the binder to the particles be 1:1.5 to 1:0.3.

That is, it is preferable that the ratio of the weight of the particles to the weight of a metal oxide of the binder be 0.3 to 1.5.

It is preferable that the cover material according to the first aspect of the invention further include a porous layer provided close to a top surface of the adherence prevention layer, the porous layer being formed of the particles.

In the cover material according to the first aspect of the invention, it is preferable that the density of the particles gradually increase in a direction from a boundary face between the adherence prevention layer and the sealant layer to a top surface of the adherence prevention layer.

A packaging container according to a second aspect of the invention includes: a covered member that is heat-seal connected to the cover material according to the aforementioned first aspect; and a container main body to be filled with contents, wherein the covered member and the sealant layer are fixed so that the covered member is intruded into cracks formed in part of the adherence prevention layer.

A cover material according to a third aspect of the invention includes: a base member; an uneven layer including resin and irregularity-forming particles having a mean particle diameter of 1 to 100 micrometers, the uneven layer being formed on one of surfaces of the base member; a sealant layer made of a thermoplastic resin formed on the uneven layer; and an adherence prevention layer including hydrophobic particles and a binder, the adherence prevention layer being formed on the sealant layer, the hydrophobic particles having a mean particle diameter which is smaller than the irregularity-forming particles and is 5 to 1000 nanometers.

In the cover material according to the third aspect of the invention, it is preferable that the resin forming the uneven layer be a thermosetting resin.

In the cover material according to the third aspect of the invention, it is preferable that the irregularity-forming particles be formed to include at least one selected from the group consisting of a urethane resin, a fluoroplastic, a silicone resin, a nylon resin, a polyethylene resin, a polystyrene resin, a polypropylene resin, a polyester resin, an acrylic resin, silicon oxide, and aluminum oxide.

In the cover material according to the third aspect of the invention, it is preferable that the thermosetting resin include at least one selected from the group consisting of a polyester resin, an acrylic resin, a polyurethane resin, an epoxy resin, a melamine resin, a phenolic resin, and a silicone resin.

In the cover material according to the third aspect of the invention, it is preferable that the hydrophobic particles be formed to include at least one selected from the group consisting of silicon oxide, aluminum oxide, titanium dioxide, and magnesium oxide.

In the cover material according to the third aspect of the invention, it is preferable that the hydrophobic particles be hydrophobic surface treated with a functional group, and the functional group is any selected from the group consisting of alkylsilyl, aminoalkylsilyl, methacrylsilyl, dimethylpolysiloxane, dimethylsiloxane, dimethylsilyl, and trimethylsilyl.

In the cover material according to the third aspect of the invention, it is preferable that the binder include metal alkoxide or hydrolyzate of metal alkoxide.

In the cover material according to the third aspect of the invention, it is preferable that the irregularity-forming particles be adhesively fixed to the base member by the thermosetting resin, and a surface roughness Rz of the adherence prevention layer is greater than or equal to 5 micrometers.

A packaging container according to a fourth aspect of the invention includes: a covered member that is heat-seal connected to the cover material according to the aforementioned third aspect; and a container main body to be filled with contents, wherein the covered member and the sealant layer are fixed so that the covered member is intruded into cracks formed in part of the adherence prevention layer.

### Effects of the Invention

The cover material according to the first aspect and the packaging container according to the second aspect of the invention can have a function of preventing the contents from being adhered thereto.

Furthermore, regarding heat resistance, a cover material can store the contents at even a further high temperature for a long period of time and can be subjected to heat-sealing.

According to the cover material of the third aspect of the invention, since the irregularity-forming particles are provided inside the thermosetting resin, it is difficult for irregularity-forming particles to move and there is not a concern that the particles are easily dropped even after the heat-sealing is carried out, and a desired water-repellent function can be reliably produced.

Moreover, according to the packaging container of the fourth aspect of the invention, even where the cover material and the packaging container are tightly sealed by heat-sealing, it can be difficult for the contents to be adhered to the cover material.

### BRIEF DESCRIPTION OF THE DRAWINGS

FIG. 1 is a cross-sectional view showing an example of a layered structure forming a cover material according to the first embodiment of the invention before filling-sealing is carried out.
FIG. 2 is a detailed cross-sectional view showing an adherence prevention layer according to the first embodiment of the invention.
FIG. 3 is a cross-sectional view showing a heat seal portion in a state of being heat-sealed onto a covered member (packaging container) using the cover material according to the first embodiment of the invention.
FIG. 4 is an enlarged cross-sectional view showing a cover material according to a second embodiment of the invention.
FIG. 5 is a cross-sectional view schematically showing a packaging container including the cover material according to the second embodiment.

### EMBODIMENTS FOR CARRYING OUT THE INVENTION

Hereinafter, a cover material and a packaging container according to embodiments of the invention will be described in detail with reference to drawings.

In the drawings, in order for the respective components to be of understandable size in the drawings, the dimensions and the proportions of the components are modified as needed compared with the real components.

### (First Embodiment)

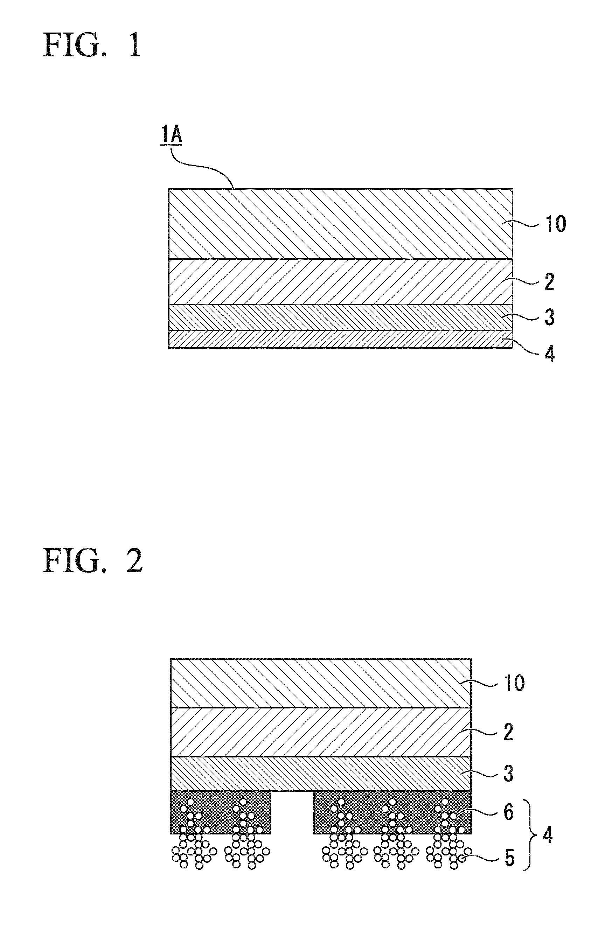

FIG. 1 is a cross-sectional view showing an example of a layered structure forming a cover material of the invention.

A cover material 1A includes a base material layer 10 (base member), an inorganic vapor-deposited film 2, and a sealant layer 3 which are stacked in layers in order from the outside (the outside of a packaging container to which the cover material is connected).

An adherence prevention layer 4 that prevents the contents from being adhered to the cover material 1A is formed on the innermost layer of the packaging container to which the cover material is connected, that is, on the surface that faces the contents packaged by the packaging container.

A paper, an oriented olefin resin such at a polyethylene terephthalate resin, polyethylene, or polypropylene, a polyamide resin, a polyvinylchloride resin, a film such as a cellulose acetate film or a cellophane film, a layered body formed of the above-mentioned materials, or the like can be used as the base material layer 10.

Furthermore, the surface or the inside of such films or such layered body may have a design by being subjected to a secondary elaboration such as printing, evaporation coating, metal-foil attachment, or the like.

In the case where there is a demand for gas barrier property, the inorganic vapor-deposited film 2 may be appropriately stacked on it.

As the inorganic vapor-deposited film, a polyethylene terephthalate film, an oriented olefin resin film such as a polyethylene film or a polypropylene film, a polyamide resin film, a polyvinylchloride resin film, a cellulose acetate film, or a film obtained by vapor-depositing aluminium, silicon oxide, titanium oxide, aluminum oxide, or the like on the surface of a film such as a cellophane film are preferable.

Other than inorganic vapor-deposited film, a metal foil such as aluminum foil may be used.

The inorganic vapor-deposited film 2 has functions of inhibiting the contents from being infiltrated thereinto, preventing the contents from being oxidatively degraded, suppressing volatilization of moisture, preventing the contents from being photo-degraded, or the like.

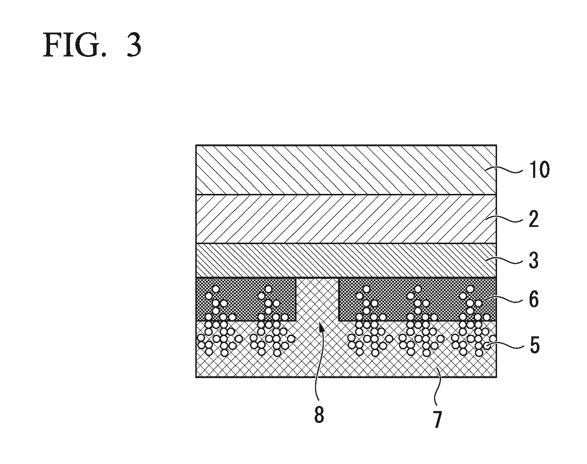

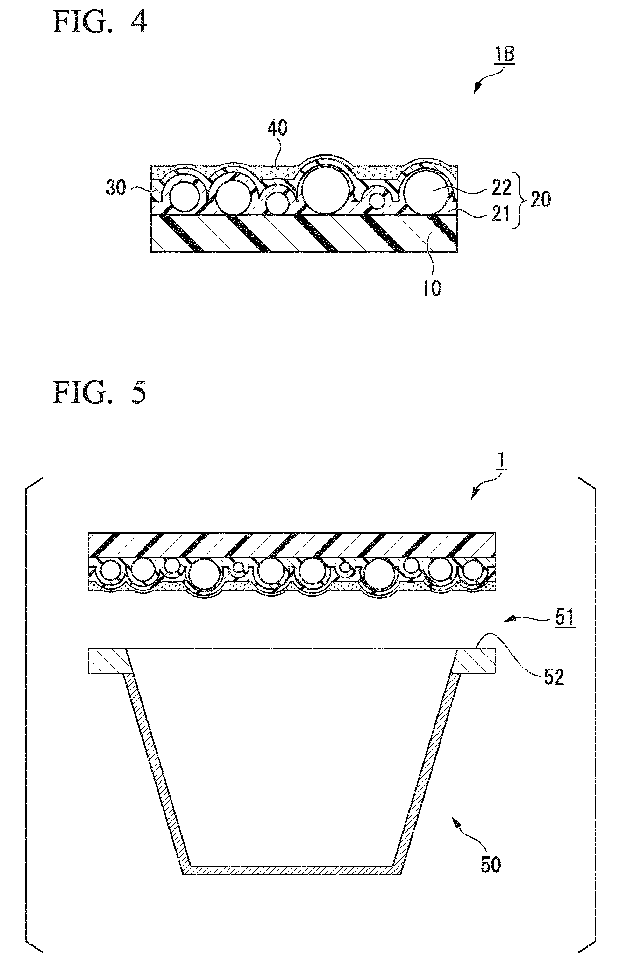

It is required that the sealant layer 3 has both capabilities of sealability between a flange portion of the packaging container (covered member, reference numeral 7 in FIG. 3, reference numeral 52 in FIG. 5) and the sealant layer 3 and easy peelability characteristics such that the cover material 1A is peeled off from the flange portion.

As long as the sealant layer 3 has high degrees of sealability and easy peelability, the material thereof is not limited to a specific material, and lacquer resin materials can be used which are dissolved or dispersed by a solvent medium and are used in coating.

As a lacquer resin component, an acrylic resin, a urethane resin, a melamine resin, an amino resin, an epoxy resin, a polyethylene resin, a styrene resin, a polypropylene resin, a polyester resin, a cellulosic resin, a vinyl chloride resin, a polyvinyl alcohol resin, an ethylene-vinyl acetate copolymer, a vinyl chloride-vinyl acetate copolymer resin, an SBR resin, or a composite material made of the aforementioned resins is used.

As a coating method using such materials, known methods such as a gravure coating method, a bar coating method, a reverse kiss coating method, a die coating method, a doctor blade coating method, a brush coating method, a dip-coating method, a spray coating method, or a spin coating method may be adopted.

As a material used to form the sealant layer, a hot melt resin material may also be used.

As a hot melt resin is made of a mixed matter including an ethylene-vinyl acetate copolymer or a polyolefin resin, a wax, and a tackifier.

As a coating method using such materials, known methods such as a gravure coating method, a bar coating method, a reverse kiss coating method, a die coating method, a doctor blade coating method, a brush coating method, a dip-coating method, a spray coating method, a spin coating method, or an extrusion lamination method may be adopted.

As a material used to form the sealant layer, a film material may also be used.

As a film resin, a low-density polyethylene resin (LDPE), a linear low density polyethylene (LEDPE), a medium density polyethylene (MDPE), a high density polyethylene (HDPE), a polypropylene resin (PP), an ethylene-methacrylic acid copolymer (EMAA), an ethylene-vinyl acetate copolymer resin (EVA), an ionomer resin (IO), a composite material made of the aforementioned resins, or a sealant film made of a multilayer material may be adopted.

Additionally, an extruded resin layer formed by an extrusion method using the aforementioned resins may be adopted.

The sealant layer 3 is easily fusion bonded to the covered member and can stably maintain sealability and realize a tight seal even in the cases where a shock is applied thereto at the time of falling or the and a pressure is applied thereto at the time of loading, and even under an environment such as a high temperature environment during storage. The sealant layer has a function of being easily peeled and opened at the time of using the contents.

As shown in FIG. 2, the adherence prevention layer 4 is formed of hydrophobic particles 5 (particles) and a binder 6.

As a material used to form the hydrophobic particles 5, inorganic oxide that is hydrophobic surface treated with an organic functional group can be used.

As inorganic oxide, one selected from the group consisting of silicon oxide, aluminum oxide, titanium oxide, magnesium oxide, or the like is used or the combination thereof is used.

As a functional group, hydrophobic silica particles (silica, hydrophobic silicon oxide particles) having a alkylsilyl group, a aminoalkylsilyl group, a methacrylsilyl group, a dimethylpolysiloxane group, a dimethylsiloxane group, particularly, a trimethylsilyl group or a dimethylpolysiloxane group are preferable.

As hydrophobic silica particles, particle having a particle siz*e* of 5 to 1000 nanometers in a mean particle diameter can be used.

In the case where the particle diameter of the hydrophobic silica particles is larger than 1000 nanometers, the hydrophobic particles 5 is excessively large and easily dropped off from the adherence prevention layer 4.

Additionally, in the case where the particle diameter of the hydrophobic silica particles is smaller than 5 nanometers, it is exceedingly difficult to handle the particles.

As the binder 6, one or more of metal alkoxides, a water-alcohol mixed solvent including the hydrolyzate thereof, and a water solution appropriately including a silane coupling agent as a main agent can be used.

The metal alkoxide is represented by M(OR)ₙ.

The M represents a metal atom.

As an example of M, Li, Na, Cu, Mg, Ca, Sr, Ba, Zn, B, Al, Ga, Y, Si, Ge, Pb, P, Sb, Ta, W, La, Nd, Ti, or the like is adopted.

The n is a valence of M.

The R represents a lower alkyl group, for example, an alkyl group having a carbon number of 1 to 4.

As a specific example of alkoxides, alkoxysilane such as methyltrimethoxysilane, aluminium propoxide, titanium isopropoxide, zinc t-butoxide, zinc n-butoxide, calcium ethoxide, iron ethoxide, vanadium isopropoxide, tin t-butoxide, lithium ethoxide, berylium ethoxide, boron ethoxide, phosphorus ethoxide, phosphorus methoxide, magnesium methoxide, magnesium ethoxide, or the like is adopted.

As a metal alkoxide used as a practical matter, it is preferable to use tetraethoxysilane, triisopropoxy aluminum, or the mixture thereof.

The ratio of the weight of the particles with respect to the weight of the binder is 0.3 to 1.5.

In the case where the ratio is lower than 0.3, the surface area on which the uppermost layer covered with the hydrophobic surface becomes smaller, and a water-repellent performance is not sufficiently obtained.

Moreover, in the case where the ratio is greater than 1.5, since the hydrophobic particles appear on the uppermost surface without being bonded to the binder, hydrophobic particles drop off due to an external stress such as friction or vibration, and the water-repellent performance thereof is easily lost.

In the case of converting the weight of the binder into the weight of the metal oxide that is obtained by modifying the composition thereof after a metal alkoxide component for use as a binder is subjected to a hydrolysis reaction and a dehydrative condensation reaction, the weight of the binder means the weight of the converted weight of the metal oxide.

For example, in the case of using tetraethoxysilane (Si(OC₂H₅)₄) having one mole (208 g) as a metal alkoxide of a binder and in the case of converting the weight of the binder into the weight of silicon dioxide (SiO₂) having one mole which serves as the metal oxide that is obtained after tetraethoxysilane is subjected to a hydrolysis reaction and a dehydrative condensation reaction, the weight is 60 g (in the case where the atomic weight of Si is 20, the atomic weight of O is 16, the atomic weight of C is 12, and the atomic weight of H is 1).

The weight of the particles means the load amount of weighed particles.

For example, in the case of loading a dispersion liquid having the particles dispersed in a solvent to a binder, the weight means the weight of the solid content of the load dispersion liquid.

Many hydrophobic particles 5 are present on the surface side of the adherence prevention layer 4.

That is, the density of the hydrophobic particles 5 gradually increases in the direction to the surface of the adherence prevention layer 4 from the boundary face between the adherence prevention layer 4 and the sealant layer 3.

This means that, a density gradient is provided in the adherence prevention layer 4.

As an apparatus that coats the hydrophobic particles 5 on the adherence prevention layer 4, an apparatus can be used which carries out known methods such as a gravure coating method, a roll coating method, a doctor blade coating method, a die coating method, a bar coating method, and a spray coating method.

Dehydrative condensation is repeated in the adherence prevention layer due to hydrolysis of metal alkoxides added to the binder 6 in a coating process, a drying process, and an aging process, and a coating film of a metal oxide is thereby formed.

At this time, the hydrophobic particles 5 move to the uppermost surface which is opposite to the boundary face between the adherence prevention layer 4 and the sealant layer 3 and which is an energetically-free gas-liquid interface.

Consequently, a binder-rich coating film containing a small amount of the hydrophobic particles 5 is formed at the boundary face between the adherence prevention layer 4 and the sealant layer 3 and in the adherence prevention layer 4.

On the other hand, a fractal structure in which the density of hydrophobic particles is high is formed near the surface of the adherence prevention layer 4 which faces the contents, and a porous layer formed of hydrophobic particles is provided*.*

Moreover, in order to increase the dispersibility of the hydrophobic particles 5, alcohol as a solvent is added to the binder composition.

Because of this, in a coating fluid state, the surfaces of the hydrophobic particles 5 can be uniformly covered with the binder.

Since a large amount of the hydrophobic particles is present on the surface of the adherence prevention layer as a result of being subjected to the coating process, the drying process, and the aging process and the surfaces of the hydrophobic particles and a gas form a boundary face, a hydrophobic functional group is exposed only on the surface that are coated with the binder and are in touch with the contents.

In the case of using as a solvent, for example, an organic solvent which is high-compatible with a hydrophobic functional group that modifies the uppermost surfaces of the hydrophobic particles, the entire surfaces of the hydrophobic particles 5 are coated with the binder, an adhesion-preventing property is not obtained. For this reason, a solvent for use in binder composition is selected in consideration of compatibility of the hydrophobic particles with the hydrophobic functional group. Particularly, alcohol or the like is preferable.

Since a porous layer formed of the hydrophobic particles 5 is provided on the surface of the adherence prevention layer 4, when the contents or the like come into contact with the adherence prevention layer 4, the hydrophobic particles 5 come into contact with the contents.

Therefore, it is possible to prevent the contents from being adhered to the surface of the adherence prevention layer 4.

A binder-rich coating is formed between the sealant layer 3 and a superficial layer in which the hydrophobic particles 5 are distributed with a high level of density, and the hydrophobic particles 5 are not deposited inside of the sealant layer 3.

Furthermore, when heat and pressure are applied to the adherence prevention layer 4 by heat-sealing and the coating of the binder is cracked, the molten surface resin of the covered member 7 (the flange portion of the packaging container) and the molten resin of the sealant layer flow into the spaces of the adherence prevention layers 4 which are formed as crack portions, and regions on which the sealant layer 3 and the covered member 7 can be directly fusion bonded are generated.

Specifically, as shown in FIG. 3, heat and pressure are applied to the adherence prevention layer 4 during heat-sealing, and cracks 8 produced by the heat and the pressure are formed.

Subsequently, the covered member 7 and the sealant resin which are molten by heat-sealing flow into the crack portions, and they are fixed to the cracks 8 by cooling.

In this manner, a structure such that part of the adherence prevention layer is anchored to both the covered member 7 and the sealant layer 3 is formed, an anchor effect is also obtained, and an effect of increasing seal strength is also obtained.

In other cases, the binder may include an initiator that causes hydrolysis reaction of metal alkoxides or a reaction control agent that controls dehydrative condensation reaction.

As the above-mentioned initiator that causes hydrolysis reaction and the above-mentioned reaction control agent that controls dehydrative condensation reaction, generally known various metal chelate compounds, acid catalysts, base catalysts, or the like are suitably selected and used depending on compositions of metal alkoxide included in the binder.

The metal alkoxides are hydrolyzed and dehydratively condensed by the action of the above-mentioned initiator that causes hydrolysis reaction and the above-mentioned reaction control agent that controls dehydrative condensation reaction, and the metal alkoxides contain the hydrolyzate or the partial condensate of metal alkoxides.

The sealability between the covered member 7 and the sealant layer 3, and the easy peelability of the sealant layer 3 such that the cover material 1A is peeled off from the covered member 7 are required.

Generally, as a material used to form a fused portion (covered member, flange portion), polypropylene, polyethylene, polystyrene, or the like is used.

An outer layer portion of the packaging container, which is other than the fused portion at which the covered member 7 is sealed, is formed in a multilayer and functions as decoration, or printing is applied to part thereof.

Moreover, a material such that it improves barrier property may be provided.

### (Second Embodiment)

A second embodiment of the invention will be described with reference to FIG. 4 and 5.

FIG. 4 is an enlarged cross-sectional view showing a cover material 1B according to a second embodiment.

The cover material 1B includes a base member 10 (base material layer), an uneven layer 20 formed on the base member 10, a sealant layer 30 (thermoplastic resin layer) that is formed on the uneven layer 20 and made of a thermoplastic resin, and an adherence prevention layer 40 (water-repellent function layer) arranged on the sealant layer 30.

A material used to form the base member 10 is not particularly limited as long as the resin included in the uneven layer 20 is sufficiently attached firmly to the material, for example, a paper, a plastic film, an aluminum foil, or the like can be used.

As the paper, a wood-free paper, a particular wood-free paper, a coated paper, an art paper, a cast-coated paper, an imitation Japanese vellum, a kraft paper, or the like can be used.

As the plastic film, a stretched film or an unstretched film can be used which are made of a polyolefin resins, an acid-modified polyolefin resin, a polyester resin, a polyethylene terephthalate resin, a polyethylene resin, a polypropylene resin, a polyamide resin, and a cellophane resin, or the like.

In addition, in the case where a gas barrier property or the like is required, a barrier base member such as an aluminum foil, an aluminum-vapor-deposited film, an inorganic oxide deposited film made of aluminum oxide, silicon oxide, or the like can be used.

Moreover, materials in which the aforementioned papers, plastic films, or the like are stacked in layers with an adhesive interposed therebetween may be used.

The uneven layer 20 provides adherence property with respect to the base member 10, has a thermosetting resin 21 (resin) that is preferably used as a resin that provides adherence property with respect to irregularity-forming particles (mixed particles), and is configured to include irregularity-forming particles 22 used to form irregularities on the surface of the uneven layer 20.

The thermosetting resin 21 functions to firmly attach the irregularity-forming particles 22 to the base member 10, in addition, functions as an anchor coating of a thermoplastic resin layer 30.

As a material used to form the thermosetting resin 21, for example, an acrylic resin, a polyurethane resin, an epoxy resin, a melamine resin, a phenolic resin, a silicone resin, a polyester resin, or the like is adopted.

As a material used to form the above-described thermosetting resin, one-liquid curable material or a two-liquid curable material containing a main agent and a curing agent may be used.

The mean particle diameter of the irregularity-forming particles 22 is 1 micrometer (µm) to 100 µm, and preferably 10 to 50 µm.

If the mean particle diameter is smaller than 1 µm, it is difficult to apply irregularities having a sufficient size to the surface of the uneven layer 20.

Furthermore, if the mean particle diameter is larger than 100 µm, it is difficult to apply highly-densified irregularities to the surface, it is not possible to improve a water-repellent function, in addition to this, the irregularity-forming particles that significantly protrude therefrom easily drop off therefrom due to an external stress such as friction.

As a material used to form the irregularity-forming particles 22, a plastic resin such as a fluoroplastic, a silicone resin, a polyamide resin, a polyethylene resin, a polypropylene resin, a polystyrene resin, a polyester resin, an acrylic resin, or a polyurethane resin, or metal oxide such as silicon oxide (silica), aluminum oxide (alumina), or magnesium oxide (magnesia) can be used.

In other cases, two or more kinds of material may be selected from the above-mentioned materials and a blended material in which a plurality of particles made of different materials are blended may be used.

As a fluoroplastic, polytetrafluoroethylene (PTFE), tetrafluoroethylene/perfluoro (alkyl vinyl ether) copolymer (PFA), fluorinated-ethylene-propylene copolymer (FEP), tetrafluoroethylene/ethylene copolymer (ETFE), polychlorotrifluoroethylene (PCTFE), EFEP, or the like is preferable.

Powders which are made of a spherical-shaped silicone rubber powder having the surface coated with a silicone resin, silicone rubber powders having a structure including cross-linked dimethylpolysiloxane, or powders made of a polyorganosilsesquioxane hardened material having a cross-linked structure represented by (RSiO_{3/2})n is preferable as silicone.

It is preferable that acrylic particles be polymethylmethacrylate, polybutyl methacrylate, polyacrylic ester, crosslinked polymethylmethacrylate, crosslinked polybutyl methacrylate, crosslinked polyacrylic ester.

The uneven layer 20 is formed by use of the thermosetting resin 21 and the irregularity-forming particles 22.

Furthermore, the irregularity-forming particles 22 forming the uneven layer 20 is coated with the thermosetting resin 21 and thereby provides a heat resistance, is attached firmly to the thermosetting resin, and is difficult to be dropped off therefrom.

Additionally, the surface shapes of the thermoplastic resin layer 30 and the adherence prevention layer 40 which are formed on the uneven layer 20 are formed in a fractal shape, and a water-repellent function of the entire cover material 1B is improved.

In the cover material 1B, the surface of the adherence prevention layer 40 is formed so that a surface roughness Rz (JIS B0601, 1994) becomes greater than or equal to 5 µm.

The surface roughness Rz means ten-point height of irregularities.

In order to obtain the surface roughness Rz, firstly, a standard length is sampled from the direction of the average line of the measured roughness curve. The sum of the average of the absolute values of the 5 highest peak points (Yp) and the average of the absolute values of the 5 lowest valley points (Yv) in the sampled section is determined. The surface roughness Rz expresses the value in micrometers (µm) obtained in the above manner.

A method of forming the uneven layer 20 is not particularly limited. It is possible to form the uneven layer 20 by, for example, applying a material in which the irregularity-forming particles 22 is mixed to the thermosetting resin 21 on the base member 10, and curing the thermosetting resin by heating aging.

Depending on the relationship between an amount of the thermosetting resin and a diameter of the irregularity-forming particles 22, part of the irregularity-forming particles 22 may be exposed from the thermosetting resin 21. However, all of irregularity-forming particles are supported by the thermosetting resin 21 located at the lower portion of the thermosetting resin 21 close to the base member 10, and are held on the base member 10 so as to have a sufficient strength.

Particularly, in the embodiment of the invention, in the case of converting an individual particle into a spherical particle, the mean particle diameter of the irregularity-forming particles means an average diameter. The diameter can be measured by visual observation using an optical microscope, a SEM (electron scanning microscope), or the like, or by using Coulter method, a dynamic scattering method, a laser scattering method.

Here, the mean particle diameter means not only an average primary particle size but also an average secondary particle size.

In the embodiment, the irregularity-forming particle is defined by a value measured by a laser scattering method.

Additionally, the contents of JIS B0601 slightly varies depending on years. The value in the invention is defined by the measurement method according to JIS in 1994.

It is only necessary for the sealant layer 30 made of a thermoplastic resin to be heat-sealable to a container main body (a flange portion, a covered member, and a packaging container) to which the cover material 1B is connected. The sealant layer may be suitably selected in consideration of a material of the container main body.

As a thermoplastic resin used to form the sealant layer 3, a hot melt resin, an extruded resin, a sealable film, or the like can be used, the material thereof is not limited to a specific material, and it is most preferable that lacquer resin materials be used which are used in coating and are dissolved or dispersed by a solvent medium that is further effectively available for the shape of the uneven layer.

As a lacquer resin component, an acrylic resin, a urethane resin, a melamine resin, an amino resin, an epoxy resin, a polyethylene resin, a styrene resin, a polypropylene resin, a polyester resin, a cellulosic resin, a vinyl chloride resin, a polyvinyl alcohol resin, an ethylene-vinyl acetate copolymer, a vinyl chloride-vinyl acetate copolymer resin, an SBR resin, or a composite material made of the aforementioned resins is used.

As a coating method using such materials, known methods such as a gravure coating method, a bar coating method, a reverse kiss coating method, a die coating method, a doctor blade coating method, a brush coating method, a dip-coating method, a spray coating method, or a spin coating method may be adopted.

For example, in the case where the container is made of PS, it is only necessary for a main component of the thermoplastic resin layer 30 (sealant layer) to be selected from a polyacrylate resin, an ethylene-vinyl acetate copolymer resin (EVA), a vinyl chloride-vinyl acetate copolymer resin, an ethylene resin, or the like.

In the case where the container is made of PP, it is only necessary for the main component to be selected from a polyacrylate resin, an ethylene-vinyl acetate copolymer resin, a modified polyolefin resin, or the like.

In the case where the container is made of PE, it is only necessary for the main component to be selected from a polyacrylate resin, an ethylene-vinyl acetate copolymer resin, an ethylene resin, or a modified polyolefin resin.

In the case of using a modified polyolefin resin, modification thereof is preferably acid modification and it is preferable to use unsaturated carboxylic acid or anhydride thereof.

Moreover, it is preferable that olefin be polypropylene or polyethylene.

Additionally, the container is classified into a chilled container, an aseptic container, a boil container, a retort container, or the like depending on the contents or a packing method.

Therefore, depending on the intended use, a material used to form a container is selected and a material used to form the thermoplastic resin layer 30 of the cover material 1B is selected.

The adherence prevention layer 40 is configured to include at least hydrophobic particles and a binder.

Not only this, but also the adherence prevention layer 40 may include a silane coupling agent that is used to increase adhesion of the interlayer thereof and the in-layer thereof or a catalyst that is used to control the reaction of the binder.

The hydrophobic particles are preferably made of inorganic oxide, various inorganic oxides such as silicon oxide (silica), aluminum oxide (alumina), magnesium oxide (magnesia), or titanium oxide (titania) can be used.

Above all, it is preferable to use silica in order to increase the adhesion with respect to the inorganic binder, synthetic silica that is obtained by: a dry process such as a combustion method or an arc method, or a sedimentation method; or a wet process such as a gel method, or natural silica may be used.

The surfaces of the hydrophobic particles are subjected to a hydrophobic treatment and an adherence prevention function is applied thereto.

As a hydrophobic treatment method, various processes such as a dry method or a wet method is available. In order to treat the entire particle surfaces, it is preferable to carry out a dry method using a chemical vapor deposition method or a plasma method, or the like, and it is preferable that a dimethylsilyl group (CH₃)₂Si(O-R)₂, a trimethylsilyl group (CH₃)₃SiO-R, a dimethylpolysiloxane group (CH₃)₂-Si-O-Si(O-R)₃, a dimethylsiloxane group, an aminoalkylsilyl, group, an alkylsilyl group, a methacrylsilyl group be used as a hydrophobic functional group.

As a result of generating the aforementioned functional group, a critical surface tension (surface energy) is reduced and the water repellency is improved.

The mean particle diameter of the hydrophobic particles is smaller than that of the irregularity-forming particles 22. As long as the mean particle diameter is 5 nanometers (nm) to 1 µm (1000 nanometers), it is not particularly limited. As particles having a diameter having various large and small sizes are present, a fractal structure is formed and the water repellency increases.

The mean particle diameter of the hydrophobic particles means the particle size of the hydrophobic particle that is attached to the surface of the adherence prevention layer and is defined as a value that is measured by SEM visual observation.

In the method of measuring the mean particle diameter by visual observation, diameters of optionally-selected 5 points are measured by SEM, particle sizes of 100 hydrophobic particles located on the observed surface of each point are measured, and the mean particle diameter is determined by calculating the average of all measurement values.

It is preferable to use metal alkoxide as a material used to form a binder.

The metal alkoxide is a material that is expressed by general expression M(OR)ₙ such as tetraethoxysilane (Si(OC₂H₅)₄) or triisopropyl aluminium (Al (OC₃H₇)₃) (here, M represents a metal such as Si, Ti, Al, Zr, R represents an alkyl group expressed by CₘH₂ₘ₊₁ (m=1 to 3) such as CH₃ or C₂H₅, and n is natural number of 1 to 4).

Above all, the characteristics of the metal alkoxide, in which M described in the above-mentioned chemical formula is Si, Al, and Ti, are excellent.

Furthermore, in the metal alkoxide, an inorganic binder in which a silane coupling agent is mixed may be used in order to improve the adhesion thereof and modify the surface thereof.

As a functional group, the silane coupling agent preferably has one of a vinyl group, an epoxy group, a styryl group, a methacryl group, an acrylic group, an amino group, an ureido group, a mercapto group, a sulfide group, and an isocyanate group.

In the method of forming the adherence prevention layer 40, first of all, as a result of mixing hydrophobic particles into a material, which is directly or preliminarily subjected to a hydrolysis reaction with metal alkoxide or a mixed matter of metal alkoxide and a silane coupling agent, a composite solution is prepared.

Subsequently, it is possible to form the adherence prevention layer 40 by coating the sealant layer 30 made of a thermoplastic resin with this composite solution.

When the above coating is carried out, a coating method is appropriately selected from known methods such as a roll coating method, a direct gravure coating method, a reverse gravure coating method, a bar coating method, a reverse kiss coating method, a die coating method, a doctor blade coating method, a brush coating method, a dip-coating method, a spray coating method, and a spin coating method, and the method can be used.

The ratio of the weight of the hydrophobic particles in the composite solution and the metal oxide included in the binder is preferably 5: 95 to 95: 5.

The weight of the hydrophobic particles with respect to the weight ratio of the hydrophobic particles in the composite solution and the weight of the metal oxide contained in the binder is preferably 5% to 95%.

In the case where the weight ratio of the hydrophobic particles is lower than 5%, the surface area on which the uppermost layer covered with the hydrophobic surface becomes smaller, and a water-repellent performance is not sufficiently obtained.

Moreover, the weight ratio of the hydrophobic particles is greater than or equal to 95%, since the hydrophobic particles appear on the uppermost surface without being bonded to the binder, hydrophobic particles drop off due to an external stress such as friction or vibration, and the water-repellent performance thereof is easily lost.

In the case of converting the weight of the binder into the weight of the metal oxide that is obtained by modifying the composition thereof after a metal alkoxide component for use as a binder is subjected to a hydrolysis reaction and a dehydrative condensation reaction, the weight of the metal oxide contained in the binder means the weight of the converted weight of the metal oxide.

The weight of the hydrophobic particles means the load amount of weighed hydrophobic particles.

For example, in the case of loading a dispersion liquid having the particles dispersed in a solvent to a binder, the weight means the weight of the solid content of the load dispersion liquid.

It is preferable that the film thickness of the adherence prevention layer 40 be in a range of 0.1 to 20 µm.

In the case where the film thickness is less than or equal to 0.1 µm, the amount of the hydrophobic particles which appear on the uppermost surface becomes low, and a level of the adherence prevention function decreases.

Additionally, if the adherence prevention layer has a film thickness of 20 microns or more, the thickness is excessively large, inhibition of the sealing is likely to occur during heat-sealing, and it is not possible to sufficiently carry out tight-sealing therefor.

Furthermore, in the case of this film thickness, the thickness compensates the irregularities due to the uneven layer 20, and there is a case where a sufficient water-repellent function cannot be produced.

It is preferable that the film thickness of the sealant layer 30 made of a thermoplastic resin be in a range of 0.1 to 20 µm.

In the case where the film thickness is less than or equal to 0.1 µm, the amount of the seal material that penetrates through the adherence prevention layer 40 during heat-sealing becomes low, and a sufficient seal strength cannot obtained.

In the case where the film thickness is greater than or equal to 20 µm, the thickness fills the irregularities which are formed by the thermosetting resin 21 and the uneven layer 20 generated by the irregularity-forming particles 22, and a sufficient water-repellent function obtained by the irregular structure cannot reappear.

When seen in a plan view of the cover material 1B (in a state of seeing it in the thickness direction), the adherence prevention layer 40 is preferably provided so as to cover 30% or more of the thermoplastic resin layer 30, more preferably, cover 70% or more thereof.

In the case where the covered surface ratio is less than 30%, the surface area on which the contents come into contact with a non-water-repellent surface increases, and it is not possible to produce a sufficient water-repellent performance.

In addition, if it is obviously understood that a portion does not come into contact with the contents during adhesive attachment of the container main body by heat-sealing or the like, the adherence prevention layer 30 may not be provided on the portion.

As explained above, according to the cover material 1B described in the second embodiment, the uneven layer 20 is provided on one of surfaces (hereinbelow, be may be referred to as "opposed face") of the base member 10 facing the contents, and the sealant 30 made of a thermoplastic resin layer and the adherence prevention layer 40 are provided on the uneven layer 20.

Since the uneven layer 20 includes the irregularity-forming particles 22, irregularities which are relatively larger than those of surface irregularities of the adherence prevention layer 40 and which have 5 µm or more in surface roughness Rz are formed on the opposed face due to the uneven layer 20.

Consequently, the structural adherence prevention effect (water repellent effect) provided by the uneven layer 20 is coupled with the adherence prevention effect (water repellent effect) which is due to a hydrophobic component provided by the adherence prevention layer 40, it is possible to produce a high level of the adherence prevention effect (water repellency) with respect to the opposed face.

Moreover, since the irregularity-forming particles 22 are supported on the base member 10 by the thermosetting resin 21, the particles hardly move in the thermoplastic resin layer 30 in the thickness direction thereof even when the cover material 1B is subjected to a heat-sealing treatment and the sealant layer 30 made of a thermoplastic resin is softened.

For this reason, generation of defects such that: the irregularity-forming particles buried in the thermoplastic resin and relatively large irregularities are thereby lost; and the irregularity-forming particles are dropped off from the cover material is reliably reduced, and a stable adherence prevention function (water-repellent performance) can be produced even before or after the heat-sealing process.

Furthermore, it is possible to reliably prevent irregularity-forming particles from dropping off even in the case where a stress or the like is affected from the outside in various processes such as a transfer process or the like other than the heat-sealing process.

Moreover, when forming the thermoplastic resin layer 30 on the uneven layer 20, even in the cases where the specific gravity value of the irregularity-forming particle 22 is approximated to that of the thermoplastic resin, since the irregularity-forming particles 22 are supported by the thermosetting resin 21, the irregularity-forming particles 22 do not move upward to thermoplastic resin layer, part of the irregularity-forming particle does not penetrate through the thermoplastic resin layer, and it is not exposed to the surface of the thermoplastic resin layer.

As a result, since the adherence prevention layer 40 reliably comes into contact with the thermoplastic resin layer 30, the layer is reliably connected to the thermoplastic resin layer 30, it is possible to realize a configuration in which it is difficult for the hydrophobic particles of the adherence prevention layer 40 to be dropped off.

As shown in FIG. 5, the cover material 1B is connected to the flange portion 52 by heat-sealing and the container main body 50 is thereby tightly sealed, and therefore, the packaging container 51 according to the embodiment of the invention is completed.

The material of the container main body 50 is not particularly limited; and a layered body in which a paper and a polyolefin resin are stacked in layers, or resins such as a polypropylene a polyethylene resin, or a polystyrene resin may be used therefor.

Furthermore, the adherence prevention layer 40 may be present on the portion of the cover material 1B which is subjected to heat-sealing.

In this case, in a heat-sealing process, cracks occur at the seal portion of the adherence prevention layer 40 to which the container main body 50 is connected, part of the sealant layer 30 made of the thermoplastic resin molten from the cracks is fusion bonded to part of the molten container main body 50, and the cover material 1B is connected to the container main body 50.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

### Examples

Hereinafter, Examples of the invention will be described.

Examples described below are absolutely configurations of the invention shown as an example, and the technical scope of the invention is not limited at all thereby.

Firstly, the cover material according to the first embodiment of the invention will be described with reference to Examples and Comparative Examples.

### <Example 1>

An imitation Japanese vellum having a thickness of 52.3 g/m² was adhesively attached to an aluminum-vapor-deposited polyethylene terephthalate film having a thickness of 16 micrometers by a dry laminate method, and a base material layer was thereby obtained.

Furthermore, the surface of the adhesively-attached aluminum-vapor-deposited polyethylene terephthalate film having a layered body was coated with a primer layer made of a two-liquid curable thermosetting resin containing a polyester resin and an isocyanate curing agent.

Thereafter, the top of the primer layer was coated with a lacquer-type sealant layer containing polyacrylate as a main component.

For preparation of an adherence prevention layer, a hydrolyzed liquid of tetraethoxysiiane Si(OC₂H₅)₄ that is hydrolyzed by a hydrochloric acid solution having 0.1-normal concentration and a dispersion liquid of the hydrophobic particles 5 which is dispersed by alcohol were sufficiently mixed, a solid content of the coating fluid was adjusted so as to be 10%, the sealant layer was coated with the adjusted coating fluid, thereafter, the adjusted coating fluid was dried, and an adherence prevention layer was thereby formed.

In the case of varying the ratio of the amount of the metal alkoxide forming a binder or the hydrolyzate thereof in terms of a metal oxide to the weight of hydrophobic particles in the adherence prevention layer 4, and in the case of varying a binder component, an adhesion-preventing property, film strength, and a heat-sealability were evaluated. The evaluation results are shown in Tables 1 and 2.

### <Evaluation method>

Evaluation of an adhesion-preventing property was carried out as follows.

A cover material was attached to a 40 degree-inclined table so that an adherence prevention layer of the cover material is directed upward, yogurt as a droplet ("Danone Bio Plain Sweetened (R)" produced by DANONE JAPAN CO, LTD.) of approximately 0.5 milliliters was dropped from above 2 centimeters of the inclined surface on the adherence prevention layer of the inclined cover material, and an adhesive state of the droplet was visually observed and evaluated.

"EXCELLENCE": The droplet was not attached (presence of the adherence prevention effect).

"GOOD": The droplet was slightly attached; however, most part of the droplet was not attached (presence of the adherence prevention effect).

"FAILURE": The droplet was attached (absence of the adherence prevention effect).

Evaluation of film strength was carried out as follows.

A cellophane tape (Registered Trademark, Cellotape (R) CT-10 produced by NICHIBAN CO., LTD.) was attached on an adherence prevention layer of the cover material. As a result of frictioning the upper of the cellophane tape using a plastic eraser, the cellophane tape was sufficiently-attached firmly to the adherence prevention layer. Thereafter, the cellophane tape was fast peeled off from the adherence prevention layer of the cover material at a 90 degree-angle thereof, and the presence or absence of attachment of the hydrophobic particles 5 to the cellophane tape was evaluated.

"GOOD": The hydrophobic particles 5 were not removed by the cellophane tape.

"FAILURE": The hydrophobic particles 5 were removed by the cellophane tape.

Evaluation of heat-sealability was carried out as follows.

Heat-sealing condition: a temperature is 210°C, a sealing pressure is 0.2 MPa, and sealing time is 3.0 seconds.

In instead of a container main body, a sample which is made of a polypropylene resin, has a width of 12 millimeters, and is formed in a rectangular shape was used.

The sample and a formation surface of an adherence prevention layer of a cover material coated with an adherence prevention layer were subjected to heat-sealing.

By use of a tensile tester, the sample was peeled off from the adherence prevention layer of the cover material at a peel rate of 300 millimeters/minutes and at a peeling angle of 90 degrees, and the peel strength thereof was measured.

On the other hand, a cover material which is not coated with the adherence prevention layer and which is to be coated therewith is prepared, the cover material was subjected to heat-sealing under the same conditions described above.

In the above-described manner, by comparing the peel strength of the cover material which is not coated with the adherence prevention layer and which is to be coated therewith to that of the cover material which is coated with the adherence prevention layer, evaluation was carried out.

"EXCELLENCE": The peel strength is 80% or more compared with the case of the absence of the adherence prevention layer (the same as the case of the absence of the adherence prevention layer).

"GOOD": The peel strength is 60% or more compared with the case of the absence of the adherence prevention layer.

"PASS": The peel strength is 30% or more compared with the case of the absence of the adherence prevention layer; however, the peel strength between the cover material and the covered member was greater than or equal to 30 g per width of 12 millimeters.

"FAILURE": The peel strength is 60% or less compared with the case of the absence of the adherence prevention layer, and the peel strength between the cover material and the covered member was less than or equal to 30 g per width of 12 millimeters (sealability was absent).

### <Evaluation Result>

**(Table 1)**

| | ADHERENCE PREVENTION LAYER | | | | | |
|---|---|---|---|---|---|---|
| NO. | AVERAGE PARTICLE DIAMETER (nm) | HYDROPHOBIC FUNCTIONAL GROUP TYPE | BINDER TYPE | COSOLVENT | BINDER/PARTICLES (WEIGHT RATIO) | SEALANT LAYER |
| 1 | 4 | DIMETHYLPOLYSILOXANE | TETRAETHOXYSILANE | ETHANOL | 1:0. 5 | POLYACRYLATE LACQUER |
| 2 | 6 | DIMETHYLPOLYSILOXANE | TETRAETHOXYSILANE | ETHANOL | 1:0. 5 | POLYACRYLATE LACQUER |
| 3 | 500 | DIMETHYLPOLYSILOXANE | TETRAETHOXYSILANE | ETHANOL | 1:0. 5 | POLYACRYLATE LACQUER |
| 4 | 550 | DIMETHYLPOLYSILOXANE | TETRAETHOXYSILANE | ETHANOL | 1:0. 5 | POLYACRYLATE LACQUER |
| 5 | 1200 | DIMETHYLPOLYSILOXANE | TETRAETHOXYSILANE | ETHANOL | 1:0. 5 | POLYACRYLATE LACQUER |
| 6 | 12 | DIMETHYLPOLYSILOXANE | TETRAETHOXYSILANE | ETHANOL | 1:2 | POLYACRYLATE LACQUER |
| 7 | 12 | DIMETHYLPOLYSILOXANE | TETRAETHOXYSILANE | ETHANOL | 1:1. 5 | POLYACRYLATE LACQUER |
| 8 | 12 | DIMETHYLPOLYSILOXANE | TETRAETHOXYSILANE | ETHANOL | 1:1 | POLYACRYLATE LACQUER |
| 9 | 12 | DIMETHYLPOLYSILOXANE | TETRAETHOXYSILANE | ETHANOL | 1:0. 8 | POLYACRYLATE LACQUER |
| 10 | 12 | DIMETHYLPOLYSILOXANE | TETRAETHOXYSILANE | ETHANOL | 1:0. 6 | POLYACRYLATE LACQUER |
| 11 | 12 | DIMETHYLPOLYSILOXANE | TETRAETHOXYSILANE | ETHANOL | 1:0. 5 | POLYACRYLATE LACQUER |
| 12 | 12 | DIMETHYLPOLYSILOXANE | TETRAETHOXYSILANE | ETHANOL | 1:0. 4 | POLYACRYLATE LACQUER |
| 13 | 12 | DIMETHYLPOLYSILOXANE | TETRAETHOXYSILANE | ETHANOL | 1:0. 3 | POLYACRYLATE LACQUER |
| 14 | 12 | DIMETHYLPOLYSILOXANE | TETRAETHOXYSILANE | ETHANOL | 1:0. 2 | POLYACRYLATE LACQUER |
| 15 | 12 | DIMETHYLPOLYSILOXANE | TETRAETHOXYSILANE | ETHANOL | 1:0. 1 | POLYACRYLATE LACQUER |
| 16 | 12 | DIMETHYLPOLYSILOXANE | TETRAETHOXYSILANE | ETHANOL | 1:0. 5 | NONE |
| 17 | NONE | NONE | TETRAETHOXYSILANE | ETHANOL | 1:0 | NONE |
| 18 | 12 | DIMETHYLPOLYSILOXANE | POLYACRYLATE | ETHYL ACETATE | 1:1 | POLYACRYLATE LACQUER |
| 19 | 12 | DIMETHYLPOLYSILOXANE | POLYACRYLATE | ETHYL ACETATE | 1:0. 5 | POLYACRYLATE LACQUER |
| 20 | 12 | DIMETHYLPOLYSILOXANE | ETHYLENE VINYL ACETATE | ETHANOL | 1:1 | POLYACRYLATE LACQUER |
| 21 | 12 | DIMETHYLPOLYSILOXANE | ETHYLENE VINYL ACETATE | ETHANOL | 1:0. 5 | POLYACRYLATE LACQUER |

**(Table 2)**

| | ADHERENCE PREVENTION LAYER | | |
|---|---|---|---|
| NO. | ADHESION WITH RESPECT TO YOGURT | FILM STRENGTH | HEAT-SEALABILITY |
| 1 | GOOD | FAILURE | EXCELLENCE |
| 2 | GOOD | GOOD | EXCELLENCE |
| 3 | EXCELLENCE | GOOD | GOOD |
| 4 | EXCELLENCE | GOOD | PASS |
| 5 | EXCELLENCE | FAILURE | EXCELLENCE |
| 6 | GOOD | FAILURE | GOOD |
| 7 | GOOD | GOOD | GOOD |
| 8 | EXCELLENCE | GOOD | EXCELLENCE |
| 9 | EXCELLENCE | GOOD | EXCELLENCE |
| 10 | EXCELLENCE | GOOD | EXCELLENCE |
| 11 | EXCELLENCE | GOOD | EXCELLENCE |
| 12 | GOOD | GOOD | GOOD |
| 13 | GOOD | GOOD | GOOD |
| 14 | FAILURE | GOOD | PASS |
| 15 | FAILURE | GOOD | PASS |
| 16 | EXCELLENCE | GOOD | PASS |
| 17 | FAILURE | GOOD | - |
| 18 | FAILURE | GOOD | GOOD |
| 19 | FAILURE | GOOD | GOOD |
| 20 | EXCELLENCE | FAILURE | PASS |
| 21 | EXCELLENCE | FAILURE | PASS |

From the results shown in Table 2, in the case where alkoxides or the hydrolyzate thereof are used as a binder and the weight ratio of the hydrophobic particles to the binder is greater than or equal to 0.3, it is possible to ensure a high level of non-yogurt adhesive. As the amount of the hydrophobic particles decreases, a level of non-yogurt adhesive (adhesion-preventing property) decreases.

Furthermore, the seal strength is degraded.

As evidenced by the above, it is understood that the porous structures provided on the surface of the adherence prevention layer impale the covered member and a high level of seal strength is thereby produced.

Furthermore, even in the case of not providing the sealant layer, it is determined that heat-sealing of the covered member with respect to the cover material can be carried out but the strength is degraded.

For this reason, in consideration of satisfaction of both the yogurt adhesion-preventing property and the film strength, it is apparent that the weight ratio of the binder to the particles is optimally 1:1.5 to 1:0.3.

Particularly, in terms of satisfaction of both the yogurt adhesion-preventing property and the film strength, the condition in which the ratio of the weight of the particles to the weight of the binder is 0.3 to 1.5 is the optimum condition.

Furthermore, under the condition in which the aforementioned ratio is 0.4 to 0.8, adhesion of a droplet of yogurt is absent, it is preferable.

As apparent from the aforementioned Example 1, since the cover material according to the first embodiment of the invention has a high level of fusion-welding with respect to the container main body and a level of adhesion to the contents is low, when the cover is removed from the container, a large amount of the contents does not adhere to the inner surface of the cover material.

Consequently, it is possible to effectively use the contents, and, after the container is used, the amount of the residual contents thereinside is less.

Moreover, also in the case of discarding the container and the cover material, since it is possible to simply carry out a water rinse and to separately discard the container and the cover material, there is a significant advantage to lower the burden of a consumer.

The cover material according to the second embodiment of the invention will be described with reference to Examples and Comparative Examples.

### <Example 2>

A nylon film having a thickness of 25 µm and a PET film having a thickness of 12 µm were subjected to dry lamination, and the base member 10 is thereby obtained.

A coating material was prepared and adjusted so that irregularity-forming particles which are made of a two-liquid curable polyester-based thermosetting resin and an acrylic resin and which have a mean particle diameter of 15 µm are dispersed at the ratio of the irregularity-forming particles of 8 parts by weight to the thermosetting resin of 10 parts by weight.

The coating material was applied on a PET layer of the base member 10 so that the thickness of the thermosetting resin becomes 2 µm, and the uneven layer 20 was thereby formed on the base member 10.

By coating the uneven layer 20 with an acrylic thermoplastic resin by gravure coating so that a film thickness after drying becomes 2 µm, the sealant layer 30 made of a thermoplastic resin was formed.

Next, a water repellent coating agent was prepared by mixing: a solution in which hydrophobic silica particles that are subjected to a dimethylpolysiloxane treatment using a dry method are dispersed in methanol; and a silica sol binder containing a silica sol solution that are prepared by mixing tetraethoxysilane (TEOS) and hydrochloric acid and by carrying out a hydrolysis reaction thereof, at a solid content weight ratio of 1: 1.

The adherence prevention layer 40 was formed by applying the water repellent coating agent on the sealant layer 30 made of a thermoplastic resin by gravure coating so that a film thickness after drying becomes 1 µm, and the cover material of Example 2 was thereby produced.

After the cover material was produced, surface observation was carried out by SEM, and a mean particle diameter of the hydrophobic particles was 80 nm.

### <Example 3>

The cover material of Example 3 was produced using the same materials as that in Example 2 in the same steps as that in Example 2 with the exception that two-liquid curable acrylic resins are used as a thermosetting resin.

### <Example 4>

The cover material of Example 4 was produced using the same materials as that in Example 2 in the same steps as that in Example 2 with the exception that particles made of an acrylic resin and having a mean particle diameter of 80 µm are used as irregularity-forming particles.

### <Example 5>

The cover material of Example 5 was produced using the same materials as that in Example 2 in the same steps as that in Example 2 with the exception that particles made of a styrene resin and having a mean particle diameter of 20 µm are used as irregularity-forming particles.

### <Example 6>

The cover material of Example 6 was produced using the same materials as that in Example 2 in the same steps as that in Example 2 with the exception that hydrophobic silica particles that are subjected to a trimethylsilyl treatment by a dry method are used as hydrophobic particles.

After the cover material was produced, surface observation was carried out by SEM, and a mean particle diameter of the hydrophobic particles was 60 nm.

### <Example 7>

The cover material of Example 7 was produced using the same materials as that in Example 2 in the same steps as that in Example 2 with the exception that a material in which triisopropyl aluminium and hydrochloric acid are mixed is used instead of TEOS.

### <Example 8>

The cover material of Example 8 was produced using the same materials as that in Example 2 in the same steps as that in Example 2 with the exception that silica particles having the particle size larger than that in Example 2 are subjected to a dimethylpolysiloxane treatment using a wet method and the hydrophobic silica particles are used as hydrophobic particles.

After the cover material was produced, surface observation was carried out by SEM, and a mean particle diameter of the hydrophobic particles was 600 nm.

### <Comparative Example 1>

A two-liquid curable polyester-based thermosetting resin was applied on a PET layer of the base member 10 having the same configuration as that in Example 2 without irregularity-forming particles so that a film thickness after drying becomes 2 µm.

Furthermore, the cover material of Comparative Example 1 was produced using the same materials as that in Example 2 in the same steps as that in Example 2.

### <Comparative Example 2>

A two-liquid curable polyester-based thermosetting resin was applied on a PET layer of the base member 10 having the same configuration as that in Example 2 without irregularity-forming particles so that a film thickness after drying becomes 2 µm, and a thermosetting resin layer was prepared.

A coating material was prepared and adjusted so that irregularity-forming particles which are made of an acrylic resin and which have a mean particle diameter of 15 µm are dispersed in an acrylic thermoplastic resin at the ratio of the irregularity-forming particles of 8 parts by weight to the thermoplastic resin of 10 parts by weight.

The dispersion liquid was applied on the thermosetting resin layer using a gravure coating method so that a film thickness of the thermoplastic resin layer after drying becomes 2 µm.

Consequently, the thermoplastic resin layer having irregularities were formed on the base member.

The cover material of Comparative Example 2 was produced by forming the adherence prevention layer 40 on the thermoplastic resin layer using the same materials as that in Example 2 in the same steps as that in Example 2.

### <Comparative Example 3>

The cover material of Comparative Example 3 was produced using the same materials as that in Example 2 in the same steps as that in Example 2 with the exception that the adherence prevention layer 40 is not formed.

### <Comparative Example 4>

The cover material of Comparative Example 4 was produced in a manner similar to that in Example 2 with the exception that irregularity-forming particles which are made of a two-liquid curable polyester-based thermosetting resin and an acrylic resin and which have a mean particle diameter of 0.5 µm are used as an uneven layer.

### <Comparative Example 5>

The cover material of Comparative Example 5 was produced using the same materials as that in Comparative Example 4 in the same steps as that in Comparative Example 4 with the exception that irregularity-forming particles which are made of a two-liquid curable polyester-based thermosetting resin and an acrylic resin and which have a mean particle diameter of 120 µm are used as irregularity-forming particles.

### <Comparative Example 6>

The cover material of Comparative Example 6 was produced using the same materials as that in Example 2 in the same steps as that in Example 2 with the exception that silica particles having the particle size larger than that in Example 8 are subjected to a dimethylpolysiloxane treatment using a wet method and the hydrophobic silica particles are used as hydrophobic particles.

After the cover material was produced, surface observation was carried out by SEM, and a mean particle diameter of the hydrophobic particles was 1200 nm.

The cover materials of the aforementioned Examples and Comparative Examples were subjected to the following tests, and the characteristics thereof were evaluated.

### a. Water-repellent performance test

Regarding the cover materials of Examples and Comparative Examples, a water droplet and a yogurt (plain) was dropped on the surface of the cover material on which the adherence prevention layer is provided, observation was carried out while gradually inclining the cover material, and visual evaluations were carried out in terms of an angle of contact, a falling angle, and repellency.

Regarding the water droplet, an angle of contact and a falling angle were evaluated. Regarding yogurt, repellency and a falling angle were evaluated.

Regarding the water droplet, a droplet of approximately 4 µl was dropped on the cover material using a microneedle, and an angle of contact is measured using a contact angle measuring instrument (CA-V: manufactured by Kyowa Interface science Co., LTD).

Additionally, a falling angle was measured while inclining the cover material.

Regarding yogurt, yogurt of approximately 0.1 ml was dropped using a dropper, and repellency and a falling angle were evaluated.

Regarding the repellency, in the case where yogurt does not remain on the cover material and are dropped therefrom when the cover material is inclined, it is determined as "GOOD"; and in the case where it flows in a state where part of yogurt remains on the cover material, it is determined as "FAILURE".

### b. Abrasion resistance test

A rubbing tester (according to JIS K 5701-1) was used. In a state where a head made of SUS presses the surface, on which the adherence prevention layer of each of cover materials is formed, at a weight of 200 g, friction in reciprocal motion are carried out 100 times, and a surface state of the scraped surface of the cover material was observed.

Moreover, water was dropped on the scraped surface, and an angle of contact and a falling angle were visually measured.

### c. Surface roughness measurement

Regarding surface roughness, two-dimensional measurement was carried out using a surface roughness meter (SURFCOM 130A manufactured by TOKYO SEIMITSU CO., LTD.), and surface roughness Rz (1994) defined by JIS B0601 was measured. The results are shown in Table 3.

**(Table 3)**

| | ANGLE OF CONTACT / FALLING ANGLE (WATER) | REPELLENCY / FALLING ANGLE (YOGURT) | AVERAGE PARTICLE DIAMETER OF HYDROPHOBIC PARTICLE(nm) | SURFACE ROUGHNESS RZ (µm) | RESULT OF RUBBING TEST | |
|---|---|---|---|---|---|---|
| | | | | | SURFACE OBSERVAtION OF COVER MATERiAL | ANGLE OF CONTACT(WATER) |
| EXAMPLE 2 | >150° / 5° | GOOD/10° | 80 | 11 | EXCELLENT | >150° |
| EXAMPLE 3 | >150° / 5° | GOOD/10° | 80 | 10 | EXCELLENT | >150° |
| EXAMPLE 4 | >150° / 5° | GOOD/10° | 80 | 42 | EXCELLENT | >150° |
| EXAMPLE 5 | >150° / 5° | GOOD/10° | 80 | 18 | EXCELLENT | >150° |
| EXAMPLE 6 | > 150° / 5° | GOOD/20° | 60 | 11 | EXCELLENT | >150° |
| EXAMPLE 7 | >150° / 5° | GOOD/10° | 80 | 10 | EXCELLENT | >150° |
| EXAMPLE 8 | >150° / 5° | GOOD/20° | 600 | 8.8 | EXCELLENT | >150° |
| COMPARATIVE EXAMPLE 1 | 130° / 10° | GOOD/30° | 80 | 2.1 | EXCELLENT | 130° |
| COMPARATIVE EXAMPLE 2 | >150° / 5° | GOOD/10° | 80 | 12 | PRESENCE OF SCRATCHES, MIXED PARTICLES WERE DROPPED OFF | 85° |
| COMPARATIVE EXAMPLE 3 | 90° / 30° | FAILURE/- | - | 13 | PRESENCE OF SCRATCHES | <90° |
| COMPARATIVE EXAMPLE 4 | 120°/ 10° | GOOD/30° | 80 | 1.5 | PRESENCE OF SCRATCHES | <90° |
| COMPARATIVE EXAMPLE 5 | 110°/ 30° | FAILURE/- | 80 | 78 | PRESENCE OF SCRATCHES, MIXED PARTICLES WERE DROPPED OFF | <90° |
| COMPARATIVE EXAMPLE 6 | 130° / 30° | FAILURE/- | 1200 | 9.0 | EXCELLENT | 130° |

As shown in Table 3, all cover materials of Examples exhibit a high level of adherence prevention function (water-repellent performance).

Furthermore, in the abrasion resistance test, after scraping the cover material by rubbing tester, it is observed that scratches on the surfaces of the cover materials are absent, and the irregularity-forming particles are not dropped off.

As described above, it is apparent that the irregularity-forming particles of the adherence prevention function layer (water-repellent function layer) and the uneven layer are supported thereby with a sufficient strength.

In contrast, in Comparative Example 1, since irregularities due to the irregularity-forming particles are not provided, a result that the adherence prevention function (water-repellent performance) is slightly poorer than that in Examples is obtained.

On the other hand, Comparative Example 2 provides an excellent adherence prevention function (water-repellent performance); however, in the abrasion resistance test, scratches occur on the post-scraped surface.

According to observation of the post-scraped surface using a microscope, it is observed that the irregularity-forming particles are dropped off.

In Comparative Example 3, both the water-repellent performance and the abrasion resistance are not sufficient.

In Comparative Example 4, the surface roughness Rz of the cover material is not sufficient, both the adherence prevention function (water-repellent function) and the abrasion resistance are insufficient.

In Comparative Example 5, according to observation of the post-scraped surface, it is observed that the irregularity-forming particles are dropped off.

The reason is believed to be that, since the sizes of the irregularity-forming particles are considerable large, a large number of irregularity-forming particles is not implanted into the sealant layer made of the thermosetting resin. Therefore, the result that a level of the abrasion resistance is low is obtained.

Furthermore, the adherence prevention layer easily gathers in the recessed portions of the uneven layer formed by the irregularity-forming particles, it is difficult for the adherence prevention layer to be applied on the top portions of the irregularity-forming particles, and therefore, the adherence prevention function (water-repellent function) is not sufficient.

In Comparative Example 6, since the particle diameter of the hydrophobic particles is large, repellency of yogurt thereof is poorer than each of Examples.

### DESCRIPTION OF REFERENCE NUMERAL

- 1A, 1B: cover material
- 10: base material layer (base member)
- 2: inorganic vapor-deposited film
- 3: sealant layer
- 4: adherence prevention layer
- 5: hydrophobic particles
- 6: binder
- 7, 52: covered member (flange portion of packaging container)
- 20: uneven layer
- 21: thermosetting resin
- 22: irregularity-forming particles
- 30: thermoplastic resin layer
- 40: adherence prevention layer
- 50: container main body
- 51: packaging container

## Claims

1. A cover material comprising:
a base member;
a sealant layer; and
an adherence prevention layer including: particles having a mean particle diameter of 5 to 1000 nanometers; and a binder used to adhesively fix the particles to the sealant layer.

2. The cover material according to claim 1, wherein
the particles are inorganic oxide that is hydrophobic surface treated with a functional group.

3. The cover material according to claim 2, wherein
the functional group includes at least one selected from the group consisting of alkylsilyl, aminoalkylsilyl, methacrylsilyl, dimethylpolysiloxane, dimethylsiloxane, trimethylsilyl, and dimethylsilyl.

4. The cover material according to claim 2 or claim 3, wherein
the inorganic oxide includes at least one selected from the group consisting of silicon oxide, aluminum oxide, titanium dioxide, and magnesium oxide.

5. The cover material according to any one of claims 1 to 4, wherein
the binder includes metal alkoxide or hydrolyzate of metal alkoxide.

6. The cover material according to any one of claims 1 to 5, wherein
a weight ratio of the binder to the particles is 1:1.5 to 1:0.3.

7. The cover material according to any one of claims 1 to 6, further comprising:
a porous layer provided close to a top surface of the adherence prevention layer, the porous layer being formed of the particles.

8. The cover material according to any one of claims 1 to 7, wherein
a density of the particles gradually increases in a direction a boundary face between the adherence prevention layer and the sealant layer to a top surface of the adherence prevention layer.

9. A packaging container comprising:
a covered member that is heat-seal connected to the cover material according to any one of claims 1 to 8; and
a container main body to be filled with contents, wherein
the covered member and the sealant layer are fixed so that the covered member is intruded into cracks formed in part of the adherence prevention layer.

10. A cover material comprising:
a base member;
an uneven layer including resin and irregularity-forming particles having a mean particle diameter of 1 to 100 micrometers, the uneven layer being formed on one of surfaces of the base member;
a sealant layer made of a thermoplastic resin formed on the uneven layer; and
an adherence prevention layer including hydrophobic particles and a binder, the adherence prevention layer being formed on the sealant layer, the hydrophobic particles having a mean particle diameter which is smaller than the irregularity-forming particles and is 5 to 1000 nanometers.

11. The cover material according to claim 10, wherein
the resin forming the uneven layer is a thermosetting resin.

12. The cover material according to claim 10 or claim 11, wherein
the irregularity-forming particles are formed to include at least one selected from the group consisting of a urethane resin, a fluoroplastic, a silicone resin, a nylon resin, a polyethylene resin, a polystyrene resin, a polypropylene resin, a polyester resin, an acrylic resin, silicon oxide, and aluminum oxide.

13. The cover material according to any one of claims 10 to 12, wherein
the thermosetting resin includes at least one selected from the group consisting of a polyester resin, an acrylic resin, a polyurethane resin, an epoxy resin, a melamine resin, a phenolic resin, and a silicone resin.

14. The cover material according to any one of claims 10 to 13, wherein
the hydrophobic particles are formed to include at least one selected from the group consisting of silicon oxide, aluminum oxide, titanium dioxide, and magnesium oxide.

15. The cover material according to any one of claims 10 to 14, wherein
the hydrophobic particles are hydrophobic surface treated with a functional group, and the functional group is any selected from the group consisting of alkylsilyl, aminoalkylsilyl, methacrylsilyl, dimethylpolysiloxane, dimethylsiloxane, dimethylsilyl, and trimethylsilyl.

16. The cover material according to any one of claims 10 to 15, wherein
the binder includes metal alkoxide or hydrolyzate of metal alkoxide.

17. The cover material according to any one of claims 10 to 16, wherein
the irregularity-forming particles are adhesively fixed to the base member by the thermosetting resin, and a surface roughness Rz of the adherence prevention layer is greater than or equal to 5 micrometers.

18. A packaging container comprising:
a covered member that is heat-seal connected to the cover material according to any one of claims 10 to 17; and
a container main body to be filled with contents, wherein
the covered member and the sealant layer are fixed so that the covered member is intruded into cracks formed in part of the adherence prevention layer.
